# EUROPÄISCHE PATENTANMELDUNG

(11) **EP 3 729 948 A1**
(43) Veröffentlichungstag der Anmeldung: **28.10.2020**
(21) Anmeldenummer: 20170965.6
(22) Anmeldetag: 23.04.2020
(51) Int. Cl.: A01D 90/04, A01F 29/09

(54) **SCHNEIDEINSATZ FÜR EINE SCHNEIDVORRICHTUNG**

(30) Priorität: 26.04.2019 DE 202019102363 U
(71) Anmelder: Siemer, Alfred, 26689 Apen (DE)
(72) Erfinder: Siemer, Alfred, 26689 Apen (DE)
(74) Vertreter: Jabbusch, Matthias

(57) **Zusammenfassung**

Schneideinsatz (1) für eine Schneidvorrichtung, insbesondere für eine Schneidvorrichtung eines landwirtschaftlichen Fahrzeuges, mit einem flächig ausgebildeten Haltekörper (3) zur Aufnahme in eine Schneidvorrichtung und mit mindestens einem die Schneide ausbildenden einen Schliff (7) aufweisenden Schneideteil (3), wobei der Haltekörper (2) zum Halten des Schneideteils (3) ausgebildet ist, wobei der Haltekörper (2) mindestens einen Aufnahmepunkt (4) zur Aufnahme in eine Schneidvorrichtung aufweist und wobei das Schneideteil (3) eine lösbare formschlüssige Verbindung mit dem Haltekörper (2) aufweist.

## Beschreibung

Die Erfindung betrifft ein Schneideinsatz für eine Schneidvorrichtung, insbesondere für eine Schneidvorrichtung eines landwirtschaftlichen Fahrzeuges.

Schneideinsätze der eingangs genannten Art sind bekannt und kommen vor allem im landwirtschaftlichen Bereich zur Verwendung. Speziell landwirtschaftliche Geräte wie Ladewagen oder Ballenpressen verfügen über eine große Anzahl einzelner Schneideinsätze, die beispielsweise beim häufigen Einsatz in der Erntezeit gegebenenfalls täglich nachgeschliffen werden müssen. Beispielsweise in einem Ladewagen können die Schneideinsätze in einer Schneidevorrichtung nebeneinander, parallel zueinander, angeordnet sein. Das Nachschleifen einer Vielzahl von Schneideinsätzen bzw. Messern kann zu einem enormen zeitlichen Aufwand führen, da die Messer, beispielsweise aus der Schneidevorrichtung eines Ladewagens, entnommen werden müssen, mitunter einzeln geschliffen werden müssen und wieder in das landwirtschaftliche Gerät eingesetzt werden müssen. Dieser große zeitliche Aufwand kann dazu führen, dass die verwendeten Messer oder auch nur einzelne Messer, nicht immer einen optimalen Schärfegrad aufweisen. Durch stumpfe Schneideinsätze kann es zu einem höheren Kraftstoffbedarf bzw. Leistungsbedarf beim Schneiden und somit zu einer geringeren Energieeffizienz kommen. Zudem können die Schneideinsätze auch unterschiedlich weit zurückgeschliffen werden. Hierdurch kann es beispielsweise zu nicht optimalen Schnittergebnissen des Schnittgutes kommen. Weiterhin kann die Einstellung eines Fremdkörperschutzes vom Schärfegrad der Schneideinsätze abhängen. Ein Fremdkörperschutz kann ein Zurückklappen eines Messers beim Auftreffen auf einen harten Fremdkörper, wie einen Stein im Schnittgut, bewirken, um eine Beschädigung des Messers zu verhindern. Bei einem stumpfen Messer muss der Fremdkörperschutz mitunter weniger flexibel eingestellt werden, um bei dem erhöhten Kraftbedarf beim Schneiden des Schnittgutes kein ungewolltes Zurückklappen der Schneideinsätze im Schnittbetrieb zu verursachen.

Der Erfindung liegt die Aufgabe zu Grunde, einen Schneideinsatz der eingangs genannten Art vorzuschlagen, bei dem ein optimaler Schärfegrad des Schneideinsatzes, ohne ein Verkürzen des Schneideinsatzes erreicht werden kann, ohne dass der komplette Schneideinsatz aus der Schneidvorrichtung entnommen werden muss.

Die Lösung dieser Aufgabe erfolgt mit einem Schneideinsatz mit den Merkmalen des Schutzanspruchs 1. Vorteilhafte Weiterentwicklungen und Ausgestaltungen sind in den Unteransprüchen angegeben.

Erfindungswesentlich vorgesehen ist ein Schneideinsatz für eine Schneidvorrichtung, insbesondere für eine Schneidvorrichtung eines landwirtschaftlichen Fahrzeuges, mit einem flächig ausgebildeten Haltekörper zur Aufnahme in eine Schneidvorrichtung und mit mindestens einem die Messerschneide ausbildenden mindestens einen Schliff aufweisenden Schneideteil, wobei der Haltekörper zum Halten des Schneideteils ausgebildet ist, wobei der Haltekörper mindestens einen Aufnahmepunkt zur Aufnahme in eine Schneidvorrichtung aufweist, wobei das Schneideteil zumindest in Schnittrichtung eine lösbare formschlüssige Verbindung mit dem Haltekörper aufweist und wobei das Schneideteil im Wesentlichen die Schneide einer Klinge ausbildet und der Haltekörper im Wesentlichen das Blatt einer Klinge ausbildet.

Es ist ein Schneideinsatz für ein landwirtschaftliches Gerät vorgesehen, das einen Haltekörper und ein davon trennbares Schneideteil aufweist. Der Haltekörper bildet eine Art Grundkörper aus, der zur Aufnahme in die Schneidvorrichtung eines landwirtschaftlichen Gerätes vorgesehen ist. Hierzu weist der Haltekörper mindestens einen Aufnahmepunkt, vorzugsweise mehrere Aufnahmepunkte, auf, an dem der Haltekörper in die Schneidvorrichtung aufgenommen werden kann. Der Haltekörper kann hierbei verschiedene Formen, je nach verwendetem Messertypen bzw. für das jeweilige landwirtschaftliche Gerät erforderlichen Messertyp, aufweisen. Der Haltekörper ist zur Aufnahme eines Schneideteils ausgebildet. Das Schneideteil bildet die Schneide des Messers, also den Bereich der zum Durchtrennen des Schnittgutes vorgesehen ist, aus. Beispielsweise kann das Schneideteil eine geschliffene Schneidkante zum Durchtrennen des Schnittgutes aufweisen. Das Schneideteil kann einen geraden Schliff, einen Wellenschliff oder ähnliche Schliffarten aufweisen und beispielsweise eine gerade oder bogenförmige Form aufweisen. Der Schneideinsatz ist somit aus mindestens zwei Bauteilen aufgebaut, wobei ein erstes Bauteil den Haltekörper darstellt, der zur Aufnahme in eine Schneidevorrichtung vorgesehen ist und wobei ein zweites Bauteil das Schneideteil darstellt, das von dem Haltekörper gehalten wird. Das Schneideteil ist hierbei lösbar mit dem Haltekörper verbunden, um einen Austausch des Schneideteils zu ermöglichen, aber gegen ein unbeabsichtigtes Lösen gesichert. Beispielsweise kann bei nachlassender Schneidwirkung aufgrund einer stumpfen Schnittkante der Haltekörper in der Schneidvorrichtung verbaut bleiben und nur das Schneideteil kann aus dem Haltekörper entfernt werden und durch ein neues Schneideteil mit optimalen Schliffgrad ersetzt werden. Um einen einfachen und schnellen Austausch des Schneideteils zu gewährleisten, weist das Schneideteil eine formschlüssige Verbindung zu dem Haltekörper auf. Beispielsweise kann das Schneideteil durch eine Verklemmung sicher von dem Haltekörper aufgenommen werden, um ein unbeabsichtigtes Lösen und somit einen sicheren Betrieb der Schneidvorrichtung zu gewährleisten. Eine Klinge besteht aus einer Schneide, also dem geschliffenen Bereich, und einem die Schneide tragenden Blatt. Das Schneideteil bildet zumindest abschnittsweise die Schneide einer Klinge aus, während der Haltekörper das Blatt einer Klinge darstellt. Ein Schneideteil kann in Verbindung mit einem Haltekörper somit eine Klinge bzw. ein Messer für eine Schneidevorrichtung, insbesondere eines landwirtschaftlichen Gerätes, ersetzen. Das zumindest einteilig im Stand der Technik ausgebildete Messer bzw. die Klinge wird durch den zweiteiligen Schneideinsatz ersetzt. Hierdurch kann mit dem Schneideteil der kleinstmögliche Teil des Messers entnommen und ersetzt werden, um die optimale Schärfe des Schneideinsatzes wiederherzustellen. Auf einen Schleifvorgang kann hierbei verzichtet werden. Somit ergeben sich keine Probleme oder notwendige Nachjustierungen aufgrund von kürzer oder unterschiedlich weit geschliffenen Klingen. Zudem ist durch den Austausch eine sehr zeiteffiziente Möglichkeit geschaffen die Schärfe der benötigten Messer wiederherzustellen. Die abgenutzten Schneidteile können dem Recycling zugeführt werden, was beim Schleifen von Messern so nicht möglich ist. Auch der Personalaufwand ist beim Schneidteilaustausch geringer als beim Nachschliefen von Messern.

In einer Weiterbildung der Erfindung bildet der Haltekörper mindestens eine Nut aus, das Schneideteil ist abschnittsweise in die Nut aufgenommen, wobei die den Schliff aufweisende Schneidkante des Schneideteils aus der Nut hervorragt. Der Haltekörper weist eine Nut auf, in die das Schneideteil abschnittsweise aufgenommen werden kann. Die Nut besteht aus zwei seitlichen Nutflanken sowie einem Nutboden. Zwischen den Nutflanken und den Nutboden wird eine Verbindungskante des Schneideteils aufgenommen, so dass eine sichere Halterung des Schneideteils in dem Haltekörper gegeben ist. Die Verbindungskante des Schneideteils ist hierbei der Schneidekante gegenüberliegend angeordnet. Aus der Nut ragt zumindest die einen Schliff aufweisende Schneidekante hervor, die zum Schneiden des Schnittgutes vorgesehen ist. Durch die Ausbildung einer Nut ist auf einfache Art und Weise eine Möglichkeit geschaffen, ein Schneideteil sicher in dem Haltekörper aufzunehmen.

In einer Weiterbildung der Erfindung weist das Schneideteil eine der Schneidekante gegenüberliegende Verbindungskante auf, die Verbindungskante ist zum Verbinden des Schneideteils mit dem Haltekörper ausgebildet und die Verbindungskante des Schneideteils und der Nutboden der Nut des Haltekörpers weisen eine zueinander korrespondierende Form auf. Das Schneideteil weist eine, einen Schliff aufweisende Schneidekante auf, die zum Schneiden des Schnittgutes vorgesehen ist. Das Schneideteil weist weiterhin eine Verbindungskante auf, die der Schneidekante gegenüberliegend angeordnet ist. Die Verbindungskante ist in die Nut des Haltekörpers aufgenommen. Die Verbindungskante des Schneideteils und der Nutboden des Haltekörpers weisen jeweils eine zueinander korrespondierende Form auf. Durch die jeweilige Form können beispielsweise sich in der Ebene des Schneideteils bzw. des Haltekörpers erstreckende Formschlussflächen, insbesondere flächige Finger, ausgebildet sein, durch die sich die Verbindungskante des Schneideteils und der Nutboden des Haltekörpers formschlüssig ineinander verzahnen. Die zueinander korrespondierenden Formen der Verbindungskante und des Nutbodens können hierbei vorzugsweise Rundungen aufweisen, aber auch eckig, beispielsweise sägezahnförmig oder prismenförmig oder ähnlich ausgeführt sein. Durch die ineinandergreifende Verzahnung ist eine formschlüssige Verbindung zwischen dem Haltekörper und dem Schneideteil gegeben. Weiterhin können die Formschlussflächen konusförmig ausgebildet sein und zueinander leicht verschiedene Steigungswinkel aufweisen, um eine selbsthemmende Wirkung der beiden Bauteile zueinander zu erzielen.

In einer Weiterbildung der Erfindung weisen die Verbindungskante des Schneideteils und der Nutboden des Haltekörpers jeweils eine zueinander korrespondierende mäanderartige Form auf und durch die mäanderartige Form sind ineinandergreifende Formschlussflächen des Schneideteils und des Haltekörpers ausgebildet. Die Verbindungskante des Schneideteils weist eine mäanderartige Form auf. Ebenso weist der Nutboden des Haltekörpers eine mäanderartige Form auf, wobei die mäanderartige Form des Nutbodens und die mäanderartige Form der Verbindungskante zueinander korrespondierend ausgebildet sind. Durch die mäanderartigen Formen sind jeweils fingerartige Formschlussflächen ausgebildet, wobei beim Ineinandergreifen der fingerartigen Flächen des Schneideteils und der fingerartigen Flächen des Haltekörpers in zumindest einer Richtung eine formschlüssige Verbindung hergestellt wird. Mäanderartige Formen können beispielsweise durch konvexe und konkave Rundungen, die durch Geraden miteinander verbunden sind, gegeben sein. Die die Rundungen verbindenden Geraden sind vorzugsweise parallel zueinander angeordnet. Durch die mäanderartigen Formen ist eine einfache und sichere formschlüssige Verbindung des Haltekörpers und des Schneideteil gegeben. Zudem können die mäanderartigen Formschlussflächen des Haltekörpers und des Schneideteils konisch ausgebildet sein und die konusförmigen Formschlussflächen der beiden Bauteile können zueinander leicht unterschiedliche Steigungen aufweisen, um eine selbsthemmende Wirkung zu erzielen.

In einer Weiterbildung der Erfindung bildet die Verbindungskante Hinterschneidungen im Bezug zur Schneidkante aus und die Hinterschneidungen sind in der von dem Schneideteil aufgespannten Ebene angeordnet. Um eine sichere formschlüssige Verbindung des Schneideteil und des Haltekörpers zu gewährleisten, weist die Verbindungskante des Schneideteil im Bezug zur Schneidekante Hinterschneidungen auf, in die die korrespondierenden Strukturen des Nutbodens des Haltekörpers hineinfassen, bzw. bildet entsprechend der Nutboden des Haltekörpers Hinterschneidungen aus. Somit ist auch in Richtung der Schneidekante, insbesondere in radialer Richtung zur Schneidekante, eine formschlüssige Verbindung des Schneideteils zu dem Haltekörper gewährleistet.

In einer Weiterbildung der Erfindung sind die Hinterschneidungen durch eine in Bezug zur Schneidekante schräge Anordnung der Formschlussflächen ausgebildet. Die Mäander und somit die Formschlussflächen des Nutbodens und der Verbindungskante können schräg zur Schneidekante angeordnet sein, so dass in Bezug zur Schneidekante Hinterschneidungen durch die Mäander ausgebildet sind. Insbesondere können die die konkaven und konvexen Rundungen verbindenden Geraden schräg zur Schneidekante angeordnet sein. Durch die parallele Anordnung der Geraden ist eine Entnahme des Schneideteils in Richtung der Geraden möglich. Durch die schräge Anordnung der Mäander bzw. der Geraden ist eine Sicherung des Schneideteils in radialer Richtung zur Schneidekante des Schneideteils gegeben. Eine Entnahme des Schneideteils aus der Nut des Haltekörpers ist nur in Richtung der Formschlussflächen zum Austausch des Schneideteils ermöglicht.

In einer Weiterbildung der Erfindung weist der Haltekörper ein Verschlussteil zum Verklemmen des Schneideteils auf. Der Haltekörper weist ein Verschlussteil zum Verklemmen des Schneideteils in der Nut des Haltekörpers auf. Das Schneideteil ist in die Nut des Haltekörper aufgenommen und durch die zueinander korrespondierenden mäanderförmigen Ausbildungen des Nutbodens des Haltekörpers sowie der Verbindungskante des Schneideteils und die hierdurch ausgebildeten Hinterschneidungen ist eine formschlüssige Verbindung zwischen dem Schneideteil und dem Haltekörper gegeben. Um ein unbeabsichtigtes Lösen der Verbindung zu verhindern, weist der Haltekörper ein Verschlussteil auf, durch das das Schneideteil in der Nut des Haltekörpers verklemmt werden kann. Insbesondere kann das Schneideteil zwischen den Formschlussflächen, die durch den mäanderförmig korrespondierenden Nutboden und die Verbindungskante ausgebildet sind, und dem Verschlussteil verklemmt werden. Durch das Verschlussteil ist die Verbindung zwischen dem Schneideteil und dem Haltekörper in alle Richtungen gegen ein unbeabsichtigtes Lösen gesichert.

In einer Weiterbildung der Erfindungen weist das Verschlussteil einen Vorsprung, insbesondere einen nasenförmigen Vorsprung, auf und das Schneideteil ist zwischen dem mäanderförmigen Nutboden und der Hinterschneidung verklemmt. Das Verschlussteil weist einen Vorsprung, insbesondere einen nasenförmigen Vorsprung, auf, der parallel zu der von dem Grundkörper aufgespannten Ebene angeordnet ist. Das Schneideteil wird in der Nut des Grundteils aufgenommen, wobei die Formschlussflächen des Schneideteil und des Nutbodens ineinandergreifen. Zwischen den Formschlussflächen des Nutbodens und dem Vorsprung des Verschlussteils wird das Schneideteil in der von dem Schneideteil aufgespannten Ebene verklemmt. Somit ist durch die Nutflanken, die Formschlussflächen und das Verschlussteil eine Sicherung des Schneideteils gegen ein ungewolltes Lösen in alle Richtungen verhindert.

In einer Weiterbildung der Erfindung ist das Verschlussteil lamellenartig ausgebildet und das lamellenartige Verschlussteil ist aus der von dem flächig ausgebildeten Haltekörper aufgespannten Ebene herausschwenkbar. Das Verschlussteil ist lamellenartig ausgebildet und vorzugsweise seitlich neben dem Formschlussflächen ausbildenden mäanderförmigen Nutboden des Haltekörpers angeordnet. Das lamellenartige Verschlussteil weist ein festes Ende auf, das eine einseitige feste Verbindung zu dem Haltekörper aufweist bzw. einteilig mit dem Haltekörper ausgebildet ist. Zudem weist das Verschlussteil ein freies Ende auf, an dem der Vorsprung angeordnet ist, das aus der von dem Verschlusskörper aufgespannten Ebene herausschwenkbar ist. Das Verschlussteil überragt mit seinem freien Ende den Nutboden, so dass das Verschlussteil eine seitliche Begrenzung des Nutbodens darstellt. Zum Einsetzen des Schneideteils in den Haltekörper kann das Schneideteil in die Nut des Haltekörpers eingefügt werden, sodass die Formschlussflächen des Haltekörpers und des Nutbodens ineinandergreifen. Hierbei wird das freie Ende des Verschlussteils verschwenkt, so dass das Schneideteil an dem Verschlussteil vorbeigeführt werden kann. Wenn das Schneideteil in die Nut eingesetzt ist, kann das Verschlussteil in seine Ausgangsposition selbstständig zurückkehren, sodass das Schneideteil zwischen den Formschlussflächen und dem Vorsprung des Verschlussteils verklemmt ist.

Entsprechend kann zum Entfernen des Schneideteils das freie Ende des Verschlussteils aus der Ebene des Haltekörpers herausgeschwenkt werden, sodass das Schneideteil an dem Verschlussteil vorbeigeführt werden kann und somit aus der Nut entfernt werden kann. Insbesondere können die Formschlussflächen des Nutbodens im Wesentlichen in Richtung des Verschlussteils weisen, so dass eine formschlüssige Verbindung des Schneideteils zwischen den Formschlussflächen und dem Verschlussteil hergestellt ist.

In einer Ausführungsform der Erfindung ist der Haltekörper aus mindestens drei flächig ausgebildeten Bauteilen aufgebaut, die Bauteile bilden eine zumindest abschnittsweise deckungsgleiche Schichtabfolge mit einem Oberteil, einem Mittelteil und einem Unterteil. Das Mittelteil ist zwischen dem Oberteil und dem Unterteil angeordnet. Zwischen dem Oberteil, dem Mittelteil und dem Unterteil ist die Nut des Haltekörpers ausgebildet und das Mittelteil bildet den zu der Verbindungskante der Schneideteils korrespondierenden Nutboden aus. Der Haltekörper des Messers kann mehrschichtig, aus mehreren, insbesondere aus drei flächig ausgebildeten Bauteilen, aufgebaut sein. Die Bauteile können beispielsweise aus Metallblech gefertigt sein und unterschiedliche Blechstärken aufweisen. Die Bauteile sind übereinander angeordnet, sodass sich für den Haltekörper eine zumindest abschnittsweise deckungsgleiche Schichtabfolge ergibt. Die Bauteile können hierbei lösbar oder unlösbar, beispielsweise durch Verschrauben, Verkleben, Vermieten oder ähnliches, miteinander verbunden sein. Insbesondere im Bereich der Aufnahmepunkte zur Aufnahme des Haltekörpers in eine Schneidevorrichtung können Bauteile deckungsgleich angeordnet sein. Der Haltekörper weist ein Unterteil, ein Oberteil und ein Mittelteil auf, wobei das Mittelteil zwischen dem Oberteil und dem Unterteil angeordnet ist. Der Haltekörper weist eine Nut auf, wobei die Nutflanken von Abschnitten des Oberteils bzw. des Unterteils ausgebildet sind und der Nutboden durch eine Seitenkante des Mittelteils ausgebildet ist. Durch die Verwendung von mehreren Bauteilen zur Ausbildung des Haltekörper ist ein einfacher konstruktiver Aufbau des Haltekörper und somit eine kostengünstige Herstellung ermöglicht, zudem ist der Haltekörper einfach an die gewünschten Anforderungen anzupassen.

In einer Weiterbildung der Erfindung ist das lamellenartige Verschlussteil durch einen Abschnitt des Mittelteils ausgebildet und das Verschlussteil ist seitlich neben dem mäanderförmigen Nutboden angeordnet. Das Verschlussteil zur Herstellung einer formschlüssigen Verbindung des Schneideteils mit dem Haltekörper ist durch einen Abschnitt des Mittelteils ausgebildet. Der Mittelteil des Haltekörpers ist aus einem Metallblech, beispielsweise einem Stahlblech, hergestellt, das in etwa der Dicke der Verbindungskante des Schneideteils entspricht. Seitlich zu dem den mäanderförmigen Nutboden des Haltekörpers ausbildenden Bereich ist das lamellenartige Verschlussteil angeordnet. Dadurch, dass der Mittelteil durch ein flexibles Stahlblech ausgebildet ist, ist das freie Ende des Verschlussteils verschwenkbar.

In einer Weiterbildung der Erfindung weisen das Oberteil und das Unterteil Aussparungen auf, die Aussparung des Oberteils und des Unterteils sind in der Schichtabfolge deckungsgleich angeordnet und die Aussparungen sind deckungsgleich zu dem Verschlussteil des Mittelteils zur Ausbildung eines Freiraumes zum Verschwenken des Verschlussteils aus der von dem Mittelteil aufgespannten Ebene angeordnet. Im Bereich des als Abschnitt des Mittelteils ausgebildeten Verschlussteils weisen das Oberteil und das Unterteil Aussparungen auf, die im Wesentlichen deckungsgleich zu dem Verschlussteil angeordnet sind. Durch die Aussparungen des Oberteils und des Unterteils ist ein Raum gegeben, in den das freie Ende des lamellenartigen Verschlussteils in Richtung des Oberteils bzw. in Richtung des Unterteils aus der von dem Mittelteil aufgespannten Ebene verschwenkt werden kann.

In einer Weiterbildung der Erfindung ist das Oberteil der geschliffenen Seite des Schneideteils zugeordnet, das Unterteil ist der ungeschliffenen Seite des Schneideteils zugeordnet und das Unterteil ragt weiter über das Schneideteil als das Oberteil. Das Schneideteil ist vorzugsweise einseitig geschliffen, wobei die Nutflanke, die der geschliffenen Seite zugewandt ist, durch einen Abschnitt des Oberteils gebildet ist und die Nutflanke, die der ungeschliffenen Seite zugewandt ist, durch einen Abschnitt des Unterteils gebildet ist. Um eine möglichst hohe Stabilität des Schneideteils zu erreichen, ragt das Unterteil weiter über das Schneideteil als das Oberteil. Somit kann das Schneideteil sehr dünn und somit sehr scharf schleifbar ausgeführt sein, ohne dass das Schneideteil zu bruchanfällig ist.

In einer Weiterbildung der Erfindung bestehen das Schneideteil und der Haltekörper jeweils aus metallischem Material. Das metallische Material des Schneideteils weist eine größere Härte als das metallische Material des Haltekörpers auf. Um eine möglichst hohe Standzeit des Schneideteils beim Einsatz zu gewährleisten, weist das metallische Material, aus dem das Schneideteil gefertigt ist, eine hohe Metallhärte auf. Da der Haltekörper bei Schneidevorgängen weniger stark beansprucht wird, kann es aus einem weniger harten und somit kostengünstigeren Metallmaterial gefertigt sein. Somit ist eine Kostenersparnis gegeben, da nur das Schneideteil aus einem Metall mit hoher Härte gefertigt werden muss. Zudem lassen sich Bauteile aus weniger hartem Metallmaterial leichter bearbeiten.

In einer Weiterbildung der Erfindung weisen das Unterteil und/oder das Oberteil Reinigungsöffnungen auf und die Reinigungsöffnungen sind in der Schichtabfolge überlappend mit den Freiräumen zwischen den Formschlussflächen des Nutbodens angeordnet. In einer Übereinanderanordnung des Unterteils, des Mittelteils und des Oberteils, weisen das Oberteil und das Unterteil Überlappungen mit den zwischen den Formschlussflächen des Mittelteils angeordneten Freiräumen auf. In diesen Bereichen sind Reinigungsöffnungen, beispielsweise Bohrungen, angeordnet. Im landwirtschaftlichen Betrieb können gegebenenfalls Schmutzpartikel in die Nut eindringen, die sich in den Freiräumen zwischen den Formschlussflächen ansammeln können und somit die formschlüssige Aufnahme des Schneideteils in der Nut des Haltekörpers behindern können. Durch die Reinigungsöffnungen können die Schmutzpartikel beispielsweise mittels Druckluft oder mittels einer Flüssigkeit ausgespült werden. Vorzugsweise sind die Reinigungsöffnungen in den mit den tiefsten Bereichen der Freiräume überlappenden Bereichen des Oberteils und Unterteils angeordnet.

Ein weiterer Aspekt der Erfindung betrifft ein Schneideteil für einen erfindungsgemäße Schneideinsatz mit einer Schneidekante und einer Verbindungskante. Ein Schneideteil für einen Schneideinsatz zum Einsatz in einer Schneidevorrichtung, insbesondere für ein landwirtschaftliches Fahrzeug weist eine Schneidekante und eine Verbindungskante auf. Die Schneidekante weist einen Schliff auf, die Verbindungskante ist zur formschlüssigen Verbindung mit einem Haltekörper ausgebildet. Insbesondere kann die Verbindungskante mäanderförmig ausgebildet sein.

Im Folgenden wird die Erfindung anhand eines in der Zeichnung dargestellten Ausführungsbeispiels näher erläutert. Im Einzelnen zeigen die Zeichnungen in:
- Figur 1:: ein erfindungsgemäßer Schneideinsatz mit einem Haltekörper und einem Schneideteil im zusammengebauten Zustand in einer Draufsicht;
- Figur 2:: ein Schneideinsatz nach Figur 1 in einer perspektivischen Darstellung;
- Figur 3:: ein Schneideinsatz nach Figur 1 in einer geschnittenen Darstellung in einer Draufsicht;
- Figur 4:: ein Schneideinsatz nach Figur 1 in einer geschnittenen Darstellung im auseinandergebauten Zustand;
- Figur 5:: die Schichtabfolge eines Haltekörpers aus Figur 1 im auseinandergebauten Zustand.

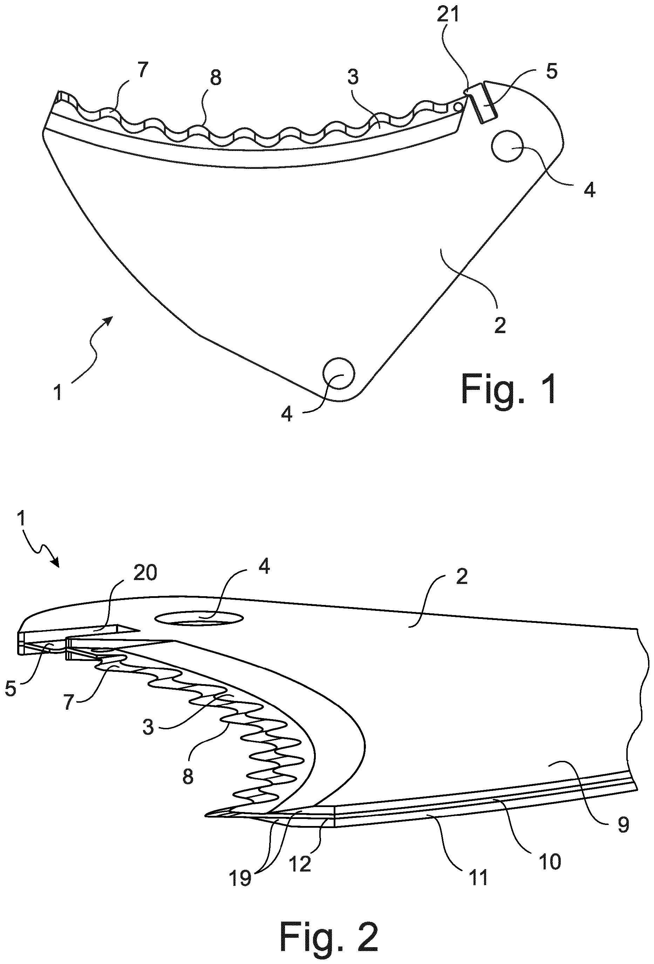

In Figur 1 ist ein Schneideinsatz 1 mit einem Haltekörper 2 und einem Schneideteil 3 dargestellt. Der Haltekörper 2 weist Aufnahmepunkte 4 zur Aufnahme des Schneideinsatzes 1 in eine Schneidevorrichtung, insbesondere in die Schneidevorrichtung eines landwirtschaftlichen Gerätes, auf. Das Schneideteil 3 und der Haltekörper 2 sind lösbar formschlüssig miteinander verbunden. Zur Sicherung der formschlüssigen Verbindung weist der Haltekörper 2 ein Verschlussteil 5 mit einem Vorsprung 21 auf. Der Vorsprung 21 ist nasenförmig ausgebildet. Das Schneideteil 3 ist durch den Vorsprung 21 des Verschlussteils 5 verklemmt. Das Verschlussteil 5 ist lamellenartig ausgebildet, so dass es aus der von dem Haltekörper 2 aufgespannten Ebene herausschwenkbar ist. Zum Entnehmen des Schneideteils 3 aus dem Haltekörper 2 bzw. zur Aufnahme des Schneideteils 3 in den Haltekörper 2 wird das lamellenartige Verschlussteil 5 aus der von dem Haltekörper 2 aufgespannten Ebene herausgeschwenkt, so dass das Schneideteil 3 an dem Verschlussteil 5 vorbei in den Haltekörper 2 eingefügt werden kann bzw. entnommen werden kann.

In Figur 2 ist ein Schneideinsatz 1 gemäß Figur 1 in einer perspektivischen Darstellung dargestellt. Das Schneideteil 3 ist in dem Haltekörper 2 aufgenommen, wobei die einen Schliff 7 aufweisende Schneidekante 8 des Schneideteils 3 aus dem Haltekörper 2 hervorragt. Der Haltekörper ist mehrschichtig aufgebaut, insbesondere aus einem Oberteil 9, einem Mittelteil 10 und einem Unterteil 11. Das Oberteil 9, der Mittelteil 10 und das Unterteil 11 bilden eine abschnittsweise deckungsgleiche Schichtabfolge. Zwischen dem Oberteil 9, dem Mittelteil 10 und dem Unterteil 11 ist eine Nut 12 ausgebildet, in die das Schneideteil 3 abschnittsweise aufgenommen ist. Aus der Nut 12 ragt die Schneidekante 8 des Schneideteils 3 hervor. Um eine hohe Stabilität und einen festen Halt zu gewährleisten, ragt das Unterteil 11 weiter über das Schneideteil 3 als das Oberteil 9, das der einen Schliff aufweisenden Schneidekante 8 des Schneideteil 3 zugeordnet ist.

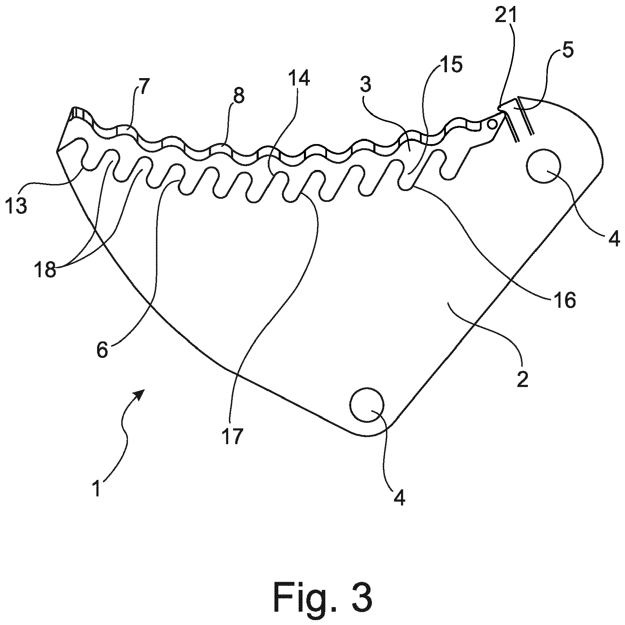

In Figur 3 ist ein Schneideinsatz gemäß Figur 1 in einer geschnittenen Darstellung dargestellt. Der Haltekörper 2 weist eine Nut 12 auf, in die das Schneideteil 3 aufgenommen ist. Das Schneideteil 3 weist eine Schneidekante 8 sowie eine Verbindungskante 13 auf. Die Verbindungskante 13 weist eine mäanderartige Form 14 auf. Durch die mäanderartige Form 14 sind Formschlussflächen 15 ausgebildet. Hierzu korrespondierend weist der Nutboden 16 eine mäanderartige Form 17 mit Formschlussflächen 18 auf. Der Nutboden 16 des Haltekörpers 2 sowie die Verbindungskante 13 des Schneideteil 3 sind zueinander korrespondierend ausgebildet, sodass die Formschlussflächen 15 des Schneideteils 3 in die Formschlussflächen 18 des Nutbodens 16 fassen und somit eine formschlüssige Verbindung zwischen dem Schneideteil 3 und dem Haltekörper 2 herstellen. Das Schneideteil 3 ist somit formschlüssig zwischen den Formschlussflächen 15 des Nutbodens 16 sowie dem Verschlussteil 5 mit dem Vorsprung 21 verklemmt. Durch die mäanderartige Form 17 sind Hinterschneidungen 6 ausgebildet. Insbesondere ist das Schneideteil 3 in radialer Richtung der Schneidekante 8 gegen ein ungewolltes Lösen gesichert.

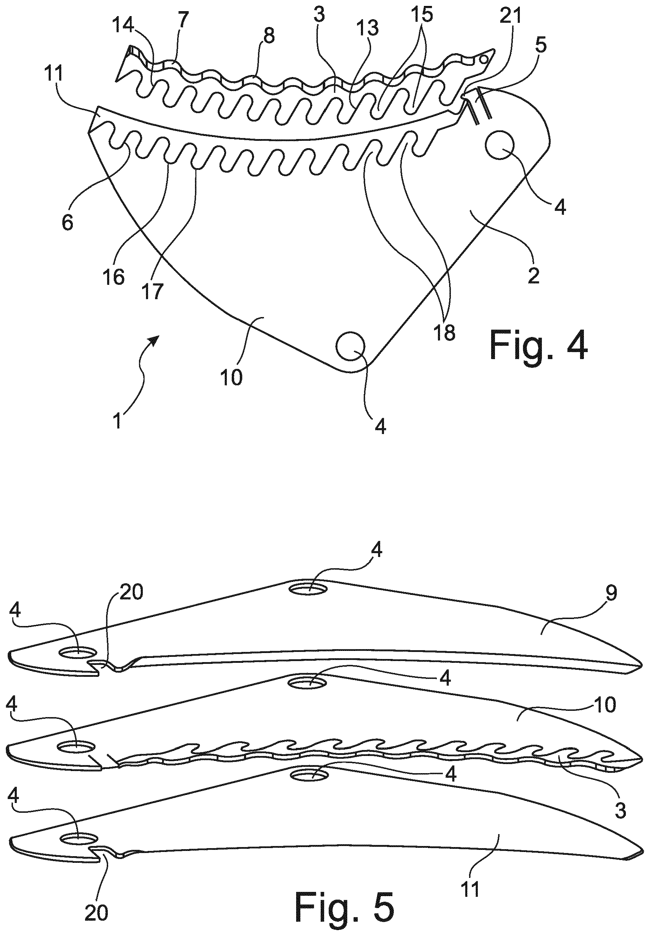

In Figur 4 ist ein Messer 1 gemäß Figur 3 im auseinandergebauten Zustand, also mit von dem Haltekörper 2 gelösten Schneideteil 3 dargestellt. Die mäanderartige Form 14 des Schneideteils 3 sowie die mäanderartige Form 17 des Haltekörpers 2 sind schräg zur Schneidekante 8 ausgerichtet, sodass durch die mäanderartige Form 17 des Haltekörpers 2 Hinterschneidungen 6 im Bezug zur Schneidekante 8 des Schneideteils 3 ausgebildet sind. Durch die Hinterschneidungen 6, in die Formschlussflächen 15 des Schneideteils 3 eingreifen, ist auch in radialer Richtung zur Schneidekante 8 eine formschlüssige Verbindung zwischen dem Schneideteil 3 und dem Haltekörper 2 gegeben.

In Figur 5 ist eine Explosionsdarstellung des Schichtaufbaus des Haltekörpers 2 eines Messers 1 dargestellt. Zwischen dem Oberteil 9 und dem Unterteil 11 ist das Mittelteil 10 angeordnet. Das Mittelteil 10 weist in etwa die Dicke der Verbindungskante 13 des Schneideteils 3 auf. Durch das Mittelteil 10 ist der Nutboden 16 mit seiner mäanderartigen Form 10 ausgebildet. Die Nutflanken 19 der Nut 12 sind durch Abschnitte des Oberteils 9 sowie des Unterteils 10 ausgebildet. Das Mittelteil 10 bildet das lamellenartige Verschlussteil 5 aus, das neben dem Nutboden 16 angeordnet ist. Das Oberteil 9 und das Unterteil 11 weisen Aussparungen 20 auf, die in der Schichtabfolge deckungsgleich zu dem Verschlussteil 5 angeordnet sind. Durch die Aussparungen 20 ist ein beidseitiger Freiraum ausgebildet, der ein Verschwenken des Verschlussteils 5 aus der von dem Mittelteil 10 aufgespannten Ebene ermöglicht.

Alle in der vorstehenden Beschreibung und in den Ansprüchen genannten Merkmale sind in einer beliebigen Auswahl mit den Merkmalen der unabhängigen Ansprüche kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

### Bezugszahlenliste:

- 1: Schneideinsatz
- 2: Haltekörper
- 3: Schneideteil
- 4: Aufnahmepunkt
- 5: Verschlussteil
- 6: Hinterschneidung
- 7: Schliff
- 8: Schneidkante
- 9: Oberteil
- 10: Mittelteil
- 11: Unterteil
- 12: Nut
- 13: Verbindungskante
- 14: mäanderartige Form
- 15: Formschlussfläche
- 16: Nutboden
- 17: mäanderartige Form
- 18: Formschlussflächen
- 19: Nutflanke
- 20: Aussparung
- 21: Vorsprung

## Patentansprüche

1. Schneideinsatz (1) für eine Schneidvorrichtung, insbesondere für eine Schneidvorrichtung eines landwirtschaftlichen Fahrzeuges, mit einem flächig ausgebildeten Haltekörper (2) zur Aufnahme in eine Schneidvorrichtung und mit mindestens einem die Schneide ausbildenden, mindestens einen Schliff (7) aufweisenden Schneideteil (3), wobei der Haltekörper (2) zum Halten des Schneideteils (3) ausgebildet ist, wobei der Haltekörper (2) mindestens einen Aufnahmepunkt (4) zur Aufnahme in eine Schneidvorrichtung aufweist, wobei das Schneideteil (3) zumindest in Schnittrichtung eine lösbare formschlüssige Verbindung mit dem Haltekörper (2) aufweist, und wobei das Schneideteil (3) im Wesentlichen die Schneide einer Klinge ausbildet und der Haltekörper (2) im Wesentlichen das Blatt einer Klinge ausbildet.

2. Schneideinsatz nach Anspruch 1, **dadurch gekennzeichnet, dass** der Haltekörper (2) mindestens eine Nut (12) ausbildet, dass das Schneideteil (3) abschnittsweise in die Nut (12) aufgenommen ist, wobei die den Schliff (7) aufweisende Schneidkante (8) des Schneideteils (3) aus der Nut (12) hervorragt.

3. Schneideinsatz nach einem der Ansprüche 1 oder 2, **dadurch gekennzeichnet, dass** das Schneideteil (3) eine der Schneidekante (8) gegenüberliegende Verbindungskante (13) aufweist, dass die Verbindungskante (13) zum Verbinden des Schneideteils (3) mit dem Haltekörper (2) ausgebildet ist und dass die Verbindungskante (13) des Schneideteils (3) und der Nutboden (16) der Nut (12) des Haltekörpers (2) eine zueinander korrespondierende Form aufweisen.

4. Schneideinsatz nach Anspruch 3, **dadurch gekennzeichnet, dass** die Verbindungskante (13) des Schneideteils (3) und der Nutboden (16) des Haltekörpers (2) jeweils eine zueinander korrespondierende mäanderartige Form (14, 17) aufweisen und dass durch die mäanderartige Form (14, 17) ineinander greifende Formschlussflächen (15, 18) des Schneideteils (3) und des Haltekörpers (2) ausgebildet sind.

5. Schneideinsatz nach einem der Ansprüche 3 oder 4, **dadurch gekennzeichnet, dass** die Verbindungskante (13) Hinterschneidungen (6) im Bezug zur Schneidkante (8) ausbildet und dass die Hinterschneidungen (6) in der von dem Schneideteil (3) aufgespannten Ebene angeordnet sind.

6. Schneideinsatz nach Anspruch 5, **dadurch gekennzeichnet, dass** die Hinterschneidungen (6) durch eine in Bezug zur Schneidekante (8) schräge Anordnung der Formschlussflächen (15) ausgebildet sind.

7. Schneideinsatz nach einem der Ansprüche 1 bis 6, **dadurch gekennzeichnet, dass** der Haltekörper (2) ein Verschlussteil (5) zum Verklemmen des Schneideteils (3) aufweist.

8. Schneideinsatz nach Anspruch 7, **dadurch gekennzeichnet, dass** das Verschlussteil (5) einen Vorsprung (21), insbesondere einen nasenförmigen Vorsprung, aufweist und dass das Schneideteil (3) zwischen dem mäanderförmigen Nutboden (16) und dem Vorsprung (21) verklemmt ist.

9. Schneideinsatz nach einem der Ansprüche 7 oder 8, **dadurch gekennzeichnet, dass** das Verschlussteil (5) lamellenartig ausgebildet ist und dass das lamellenartige Verschlussteil (5) aus der von dem flächig ausgebildeten Haltekörper (2) aufgespannten Ebene herausschwenkbar ist.

10. Schneideinsatz nach einem der Ansprüche 1 bis 9, **dadurch gekennzeichnet, dass** der Haltekörper (2) aus mindestens drei flächig ausgebildeten Bauteilen (9, 10, 11) aufgebaut ist, dass die Bauteile (9, 10, 11) eine zumindest abschnittsweise deckungsgleiche Schichtabfolge mit einem Oberteil (9), einem Mittelteil (10) und einem Unterteil (11) bilden, dass das Mittelteil (10) zwischen dem Oberteil (9) und dem Unterteil (11) angeordnet ist, dass zwischen dem Oberteil (9), dem Mittelteil (10) und dem Unterteil (11) die Nut (12) des Haltekörpers (2) ausgebildet ist und dass das Mittelteil (10) den zu der Verbindungskante (13) der Schneideteils (3) korrespondierenden Nutboden (16) ausbildet.

11. Schneideinsatz nach Anspruch 10, **dadurch gekennzeichnet, dass** das lamellenartige Verschlussteil (5) durch einen Abschnitt des Mittelteils (10) ausgebildet ist und dass das Verschlussteil (5) seitlich neben dem mäanderförmigen Nutboden (16) angeordnet ist.

12. Schneideinsatz nach einem der Ansprüche 10 oder 11, **dadurch gekennzeichnet, dass** das Oberteil (9) und das Unterteil (11) Aussparungen (20) aufweisen, dass die Aussparung (20) des Oberteils (9) und des Unterteils (11) in der Schichtabfolge deckungsgleich sind und dass die Aussparungen (20) deckungsgleich zu dem Verschlussteil (5) des Mittelteils (10) zur Ausbildung eines Freiraumes zum Verschwenken des Verschlussteils (5) aus der von dem Mittelteil (10) aufgespannten Ebene angeordnet sind.

13. Schneideinsatz nach einem der Ansprüche 10 bis 12, **dadurch gekennzeichnet, dass** das Schneideteil (3) einseitig geschliffen ist, dass das Oberteil (9) der geschliffenen Seite des Schneideteils (3) zugeordnet ist und dass das Unterteil (11) der ungeschliffenen Seite des Schneideteils (3) zugeordnet ist und dass das Unterteil (11) weiter über das Schneideteil (3) ragt als das Oberteil (9).

14. Schneideinsatz nach einem der Ansprüche 1 bis 13, **dadurch gekennzeichnet, dass** das Schneideteil (3) und der Haltekörper (2) jeweils aus einem metallischem Material bestehen und dass das metallische Material des Schneideteils (3) eine größere Härte als das metallische Material des Haltekörpers (2) aufweist.

15. Schneideinsatz nach einem der Ansprüche 1 bis 14, **dadurch gekennzeichnet, dass** das Unterteil (11) und/oder das Oberteil (9) Reinigungsöffnungen aufweisen und dass die Reinigungsöffnungen in der Schichtabfolge (9, 10, 11) überlappend mit den Freiräumen zwischen den Formschlussflächen (18) des Nutbodens (16) angeordnet sind.

16. Schneideteil (3) für ein Schneideinsatz (1) nach einem der vorhergehenden Ansprüche mit einer Schneidekante (8) und einer Verbindungskante (13).
